# EUROPEAN PATENT SPECIFICATION

(11) **EP 3 203 850 B1**
(45) Date of publication and mention of the grant of the patent: **26.01.2022**
(21) Application number: 15784589.2
(22) Date of filing: 09.10.2015
(51) Int. Cl.: A22B 5/00

(54) **CHILLING MEAT CARCASSES**
VERKÜHLUNG VON SCHLACHTTIEREN
REFROIDISSEMENT D'ANIMAUX D'ABATTAGE

(30) Priority: 09.10.2014 IE 20140252
(43) Date of publication of application: 16.08.2017
(73) Proprietor: Devrone Unlimited Company, Ardee, County Louth (IE)
(72) Inventor: MCDONNELL, Declan Arthur, County Louth (IE)
(74) Representative: Weldon O'Brien Ltd.
(86) International application number: PCT/EP2015/073450
(87) International publication number: WO 2016/055639

(56) References cited:
- GB-A- 1 380 891
- US-A1- 2004 214 516
- US-B2- 7 625 271
- US-B2- 8 002 614

## Description

### Introduction

In current technology for processing beef, animals destined for meat are desensitised (by means of a captive or percussion bolt to the head), exsanguinated and then dressed so that the external hide/skin and internal organs are removed. The remainder of the animal (called the half carcass or side) which consists of beef muscles, fats and bones located on a beef half-carcass are chilled together in circulating air at a low temperature (typically 0°C to 2°C) for a period of time (for example 48hrs). During this period, the muscles are lowered in temperature, pH and enter into rigor mortis. In rigor mortis, the muscle shortens, toughens and becomes rigid in shape and structure.

The process of chilling the muscle/fat/bone surface interface creates a temperature gradient between the air and the meat (for example 2°C air vs 24°C meat surface). This causes some meat moisture to evaporate under reduced partial pressure conditions. This evaporation reduces meat yield and causes dark beef which must be trimmed and downgraded during further butchery.

It is known to chill carcasses at elevated temperature (such as 10°C) for periods of 10 to 15 hrs post slaughter to improve the texture of the meat. However, such conditions promote the growth on the beef surface of spoilage bacteria and potentially food pathogens that are harmful to health. US7,625,271B2 describes a method of cooling a dressed carcass of a slaughtered animal in a cooling chamber.

### Statements of Invention

According to the invention there is provided a method for processing meat as defined in claim 1.

According to the invention, the surface of the carcass is deluged multiple times at spaced-apart intervals.

In one case, during chilling, the carcass is deluged at time intervals of from 5 to 15 minutes, typically about 10 minutes.

Preferably the surface of the carcass is periodically deluged over a period of from 10 to 150 minutes, typically about 120 minutes.

The deluge water is at a temperature of from 5°C to 20°C, typically about 10°C. In some embodiments the deluge water is at a temperature of from 0°C to 20°C. Preferably the deluge water is chilled water at a temperature of about 1°C to about 10°C. Chilled water chills the surface of the carcass more efficiently.

Preferably the carcass surface water activity is from 0.8 to 1.0 during product storage.

Preferably the air circulating during chilling is maintained at a relative humidity of greater than 90%.

In some stages the surface of the carcass may be deluged with a solution containing organic acid at a concentration of from 2% to 5%. These stages may be the first and/or last deluge.

In one case the carcass is deluged at least 5 times between a first deluge and a final deluge and wherein the first and/or the final deluge is with a solution containing organic acid at a concentration of from 2% to 5%.

The method is carried out on multiple carcasses which are led through an enclosure and all carcasses led through the enclosure have the same residence time in the enclosure and are all subjected to the same treatment. The enclosure comprises a plurality of cubicles in which the carcasses are deluged as they are moved through the enclosure.

Also described is an enclosure that includes a recirculation loop in which carcass sides within the enclosure complete a full cycle after fresh carcasses have entered into the enclosure. This cycle ensures that a side receives the prescribed treatment and is not under or over treated. This feature also enables the enclosure to be used as a conventional batch chill overnight which is economically important as the enclosure does not reduce plant capacity.

The method comprises turning the carcass as it is led through the enclosure.

Each cubicle comprises a plurality of spaced-apart nozzles for delivering the surface of the carcass. The nozzles may be directed towards the surfaces of the carcass.

In one embodiment the enclosure comprises an overhead track along which the carcasses are led through the enclosure and the cubicles, the overhead track being located above the cubicles.

The meat carcass may be beef, pork, lamb, deer, buffalo, or horse. Most preferably the carcass is a red meat carcass, especially beef. It is particularly preferred that the carcass is one that is split along the back bone as this facilitates muscle removal with minimal impact on underlying meat which can be removed in subsequent butchery processes.

In one embodiment the carcass is a beef carcass.

The present disclosure also refers to an enclosure for chilling meat carcasses not being part of the invention, which comprises a plurality of cubicles through each of which the carcasses are led for deluging the surface of the carcass multiple times are spaced-apart intervals, the surface of the carcass being deluged in the cubicles with water and/or a dilute solution of organic acid. The treatment induces carcass surface evaporation and binding of water onto the carcass surface.

The enclosure comprises an overhead track along which the carcasses are led though the enclosure and the cubicles, the overhead track being located above the cubicles.

The track is adapted to turn a carcass as it is led though a cubicle. Each cubicle comprises a plurality of nozzles which are arranged to deluge the carcass in the cubicle.

The enclosure may comprise a recirculation loop for recirculating carcasses through the enclosure.

### Brief Description of the Drawings

The invention will be more clearly understood from the following description of an embodiment thereof, given by way of example only with reference to the accompanying figures in which:-
Fig. 1 is a plan view of an evaporative pre-chill enclosure suitable for the method according to the invention;
Fig. 2 is an isometric view of a conveyor and rail system of the enclosure;
Fig. 3 is an isometric view of a cubicle in which a carcass is deluged;
Fig. 4 is a view of the cubicle with the carcass in place;
Figs. 5 and 6 are views of a nozzle used to deluge a carcass;
Fig. 7 illustrates the turning of a carcass as it passes through a cubicle;
Fig. 8 is a bar chart of Total Viable Count for beef carcasses processed in accordance with the invention compared to a control carcass (i.e. an animal conventionally chilled in air at 0°C);
Fig. 9 is a bar chart of microbe levels used as indicators of food safety for beef carcasses processed in accordance with the invention compared to conventionally chilled carcasses in air at +10°C;
Fig. 10 is a bar chart illustrating the difference in weight loss at different extended chilling times (90 to 120 minutes) in accordance with the invention compared to conventional chilling; and
Fig. 11 is a bar chart illustrating % gain in weight loss under more rapid, low temperature, short duration (10-60 minutes, 0°C to -20°C) chilling conditions in accordance with the invention compared to conventional chilling.

### Detailed Description

Animals destined for meat are desensitised, exsanguinated and then dressed so that the external hide/skin and internal organs are removed. The remainder of the animal (called the half carcass or side) consists of muscles, fats and bones. The half carcass or side is then directly subjected to chilling. The half carcass or side is not pasteurised or scalded.

Beef sides are automatically chilled under defined conditions of temperature, relative humidity, wind speed, surface water activity, orientation and time in order to optimise carcass appearance, texture, microbiological status and saleable meat yield. In particular, carcass surfaces are deluged (not atomised spray) in potable water (or dilute 2% to 5% organic acid) at prescribed intervals for a specified elapsed time in order to induce surface evaporation and binding of water into the surface due to the pre-rigor condition of the surface of the carcass. Carcasses are processed under the following range of conditions:
- Air temperature: 0°C to 15°C
- Wind speed: 0.5 to 2 m/s
- RH: greater than 90%
- Surface water activity: 0.8 to 1.0
- Elapsed time for evaporation phase: 10 to 120 mins
- Elapse time between water application: 5 to 15 mins
- Deluge water molecule size: 1 to 2 mm
- Water temperature (0 to 20°C) (5 to 20°C), preferably 1°C to 10°C
- Carcass surface temperature entering process: greater than 22°C
- Carcass surface temperature exiting the process: less than 10°C

In a preferred embodiment, beef half carcasses are subjected to the process for 120 minutes at 0°C, 1m/s, 100% RH air and are deluged/sprayed 10 times with 10°C water.

Optionally, the first and/or final deluge contains an organic acid solution to reduce bacterial load on the surface.

The pre-chill process of the invention produces top quality beef capable of being subsequently dry aged for 10 - 28 days under automated hygienic conditions. The beef is transported through an enclosure in a controlled "stop-start" fashion which minimises process footprint, facilitates accurate water application and defined process time and spray intervals. The enclosure comprises a plurality of water application cubicles which provide simple and easy carcass ingress/egress while enclosing water mists/droplets so they can be positively ducted to trapped drains.

The pre-chill cubicles and nozzles automatically affect adequate water coverage given the complex geometry and variations of typical beef sides.

The enclosure also includes a recirculation loop in which carcass sides within the enclosure complete a full cycle after fresh carcasses have entered into the enclosure. This cycle ensures that a side receives the prescribed treatment and is not under or over treated. This feature also enables the enclosure to be used as a conventional batch chill overnight which is economically important as the enclosure does not reduce plant capacity.

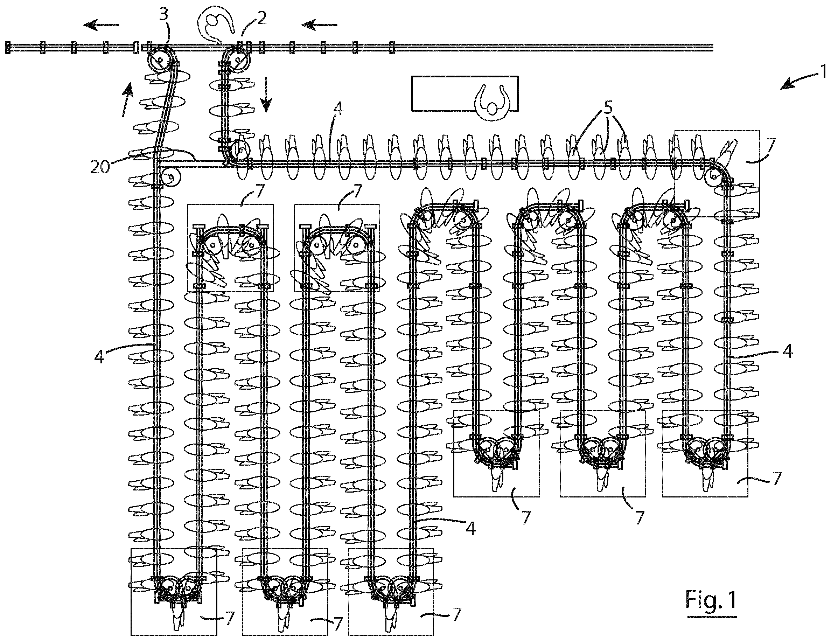

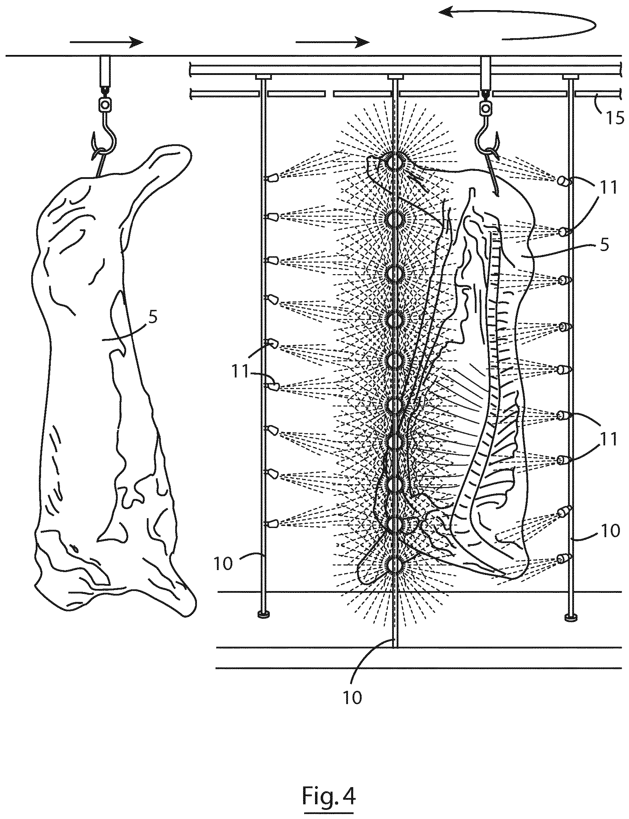

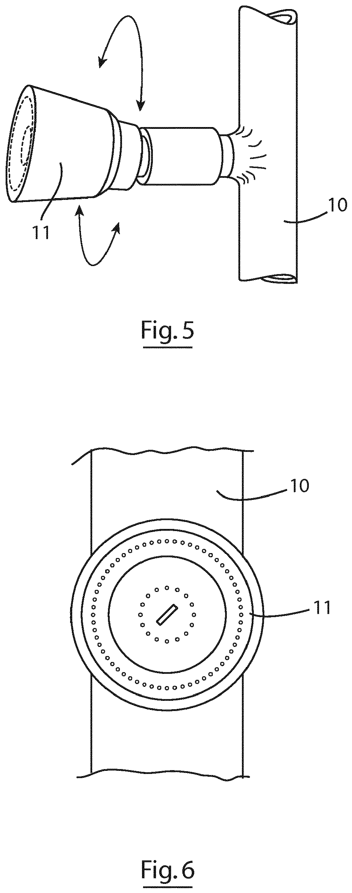

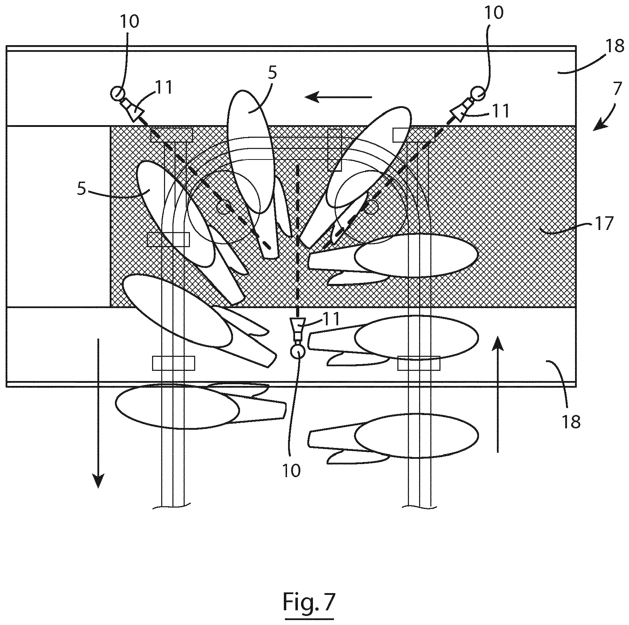

Referring to Figs. 1 to 7 of the drawings there is illustrated an enclosure 1 for chilling meat carcasses. The enclosure comprises an overhead track 4 which has an inlet end 2, an outlet end 3 and a plurality of interconnected legs within the enclosure along each of which a carcass 5 is led. The enclosure has a plurality of cubicles 7 through which the carcasses are led. It will be noted that the overhead track is configured to turn the carcasses 5 as they are led through the cubicle. This ensures that all of the surfaces of the carcass are exposed as the carcass travels through the cubicle.

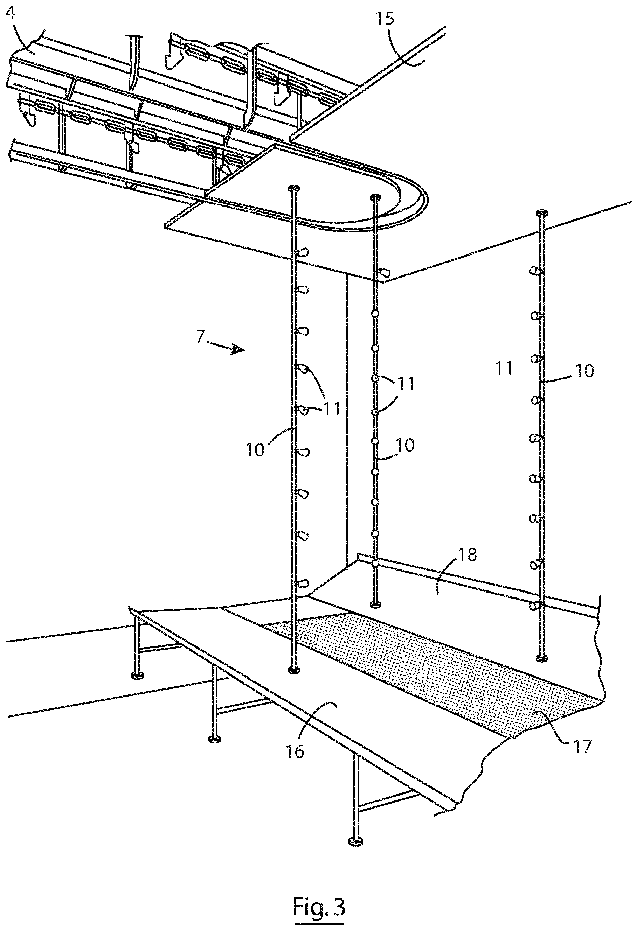

Each cubicle comprises liquid supply pipes 10 which are fitted with a plurality of nozzles 11. The pipes 10 may be arranged in a triangular configuration with the nozzles 11 extending inwardly as will be particularly apparent from Figs. 3, 4 and 7. The nozzles are mounted to the supply pipes 10 and are orientated to direct a deluge of water at the carcass as it travels through the cubicle in such a manner as to ensure that all of the surfaces of the carcass are deluged.

It will be noted that each cubicle 7 is below the overhead track and a screen 15 may be provided to substantially isolate the track from the enclosure to avoid the track contacting water which could drip down and cause contamination. The cubicle 7 has a floor 16 with a mesh screen 17 for water run-off from the cubicle 7. Deflectors 18 guide water run-off to the mesh screen 17.

The enclosure is configured to facilitate re-circulation of carcasses though the enclosure when the cubicles are not operated. In this case there is a connector leg 20 which may be used to interconnect the overhead track between the outlet leg 3 and the inlet leg 2. During operation, carcasses are led into the enclosure through the inlet 2 and when all treatments in the enclosure are complete the carcass is usually led out of the enclosure through the outlet 3. When upstream processing of animals is completed, the connector leg 20 may be operated so that instead of a carcass exiting the enclosure when the operations are complete it is recirculated through the enclosure but not deluged for a second cycle. As the last fresh carcass to enter the enclosure passes through the cubicles they are progressively shut down so that following (recirculating) carcasses are not treated. In this way the enclosure may be used as an additional chill room which has significant economic benefits.

The method of the invention produces beef sides with the following improvements over conventionally chilled sides:
i. Fresher red appearance (called bloom) with no removal of dark trim due to dehydration during subsequent trimming
ii. Improved yield of saleable meat (1%) due to substitution of product moisture with sacrificial added "evaporation" water. The use of large molecule rather than atomised water application enhances this effect as the water can bind to the surface for longer periods.
iii. Reduced incidence of aerobic spoilage bacteria (0.3 logN reduction total viable count) & food safety indicator organisms due to the rapid fall in surface temperature using pre-chill conditions especially the evaporation effect after moisture application. In addition, the use of organic acid is made more susceptible due to the thermal shock effect.
iv. The enclosure does not force a meat processing factory to use one of its conventional chills as a pre-chill. The pre-chill enclosure used in the invention automatically converts to a batch chiller for overnight storage.
v. The enclosure is hygienic and meets all regulatory requirements.

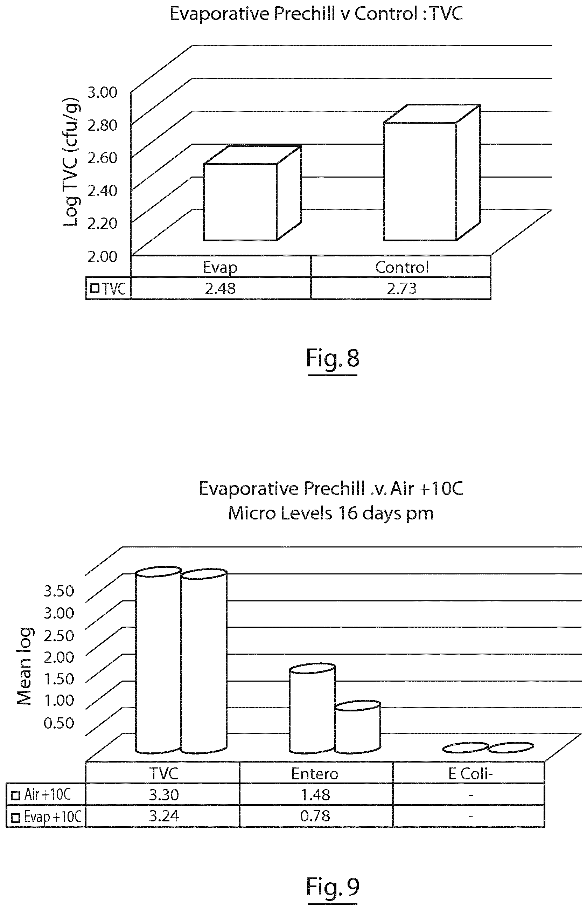

Figs 8 to 11 show the results from an extensive series of scientific experiments to assess the effects of time, air temperature, product temperatures, wind speed, water application and carcass type on product mass balance, organoleptic, chemical and microbiological properties over conventional air chilling.

Fig. 8 is a bar chart of Total Viable Count for beef carcasses processed in accordance with the invention compared to a control carcass (i.e. an animal conventionally chilled in air at 0°C); the graph shows the benefits of surface evaporation leading reduced surface temperatures and consequently lower levels of total bacteria on the surface. In summary, evaporation leads to a reduction of 0.3log units for TVC (Colony Forming units/gram).

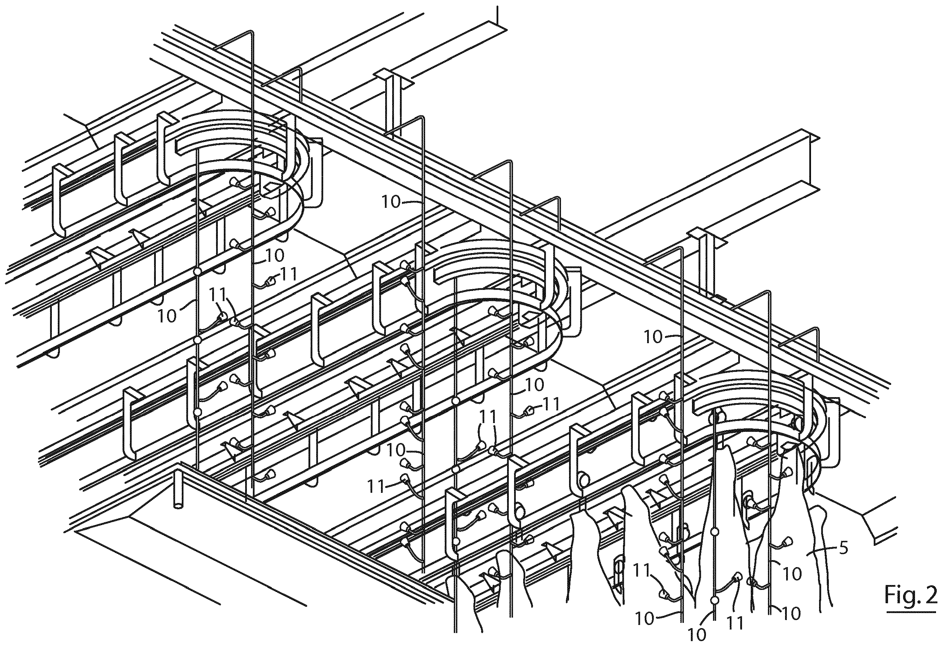

Fig. 9 is a bar chart of microbe levels used as indicators of food safety for beef carcasses processed in accordance with the invention compared to conventionally chilled carcasses in air at +10°C; Indicator organisms of faecal contamination & food safety include Enterobactericeae and generic Escherichia Coli (E.Coli). Fig 2 reveals that evaporative chilling significantly lowers the quantity of these organisms (particularly Enterobactericeae) over conventional chilling

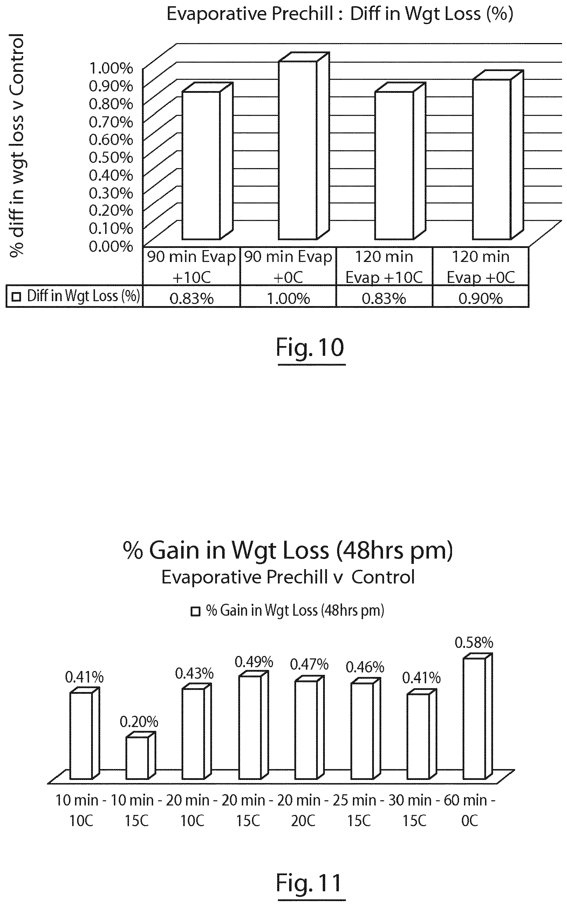

Fig. 10 is a bar chart illustrating the difference in weight loss at different extended chilling times (90 to 120 minutes) in accordance with the invention compared to conventional chilling; and

Fig. 11 is a bar chart illustrating % gain in weight loss under more rapid, low temperature short duration (10-60 minutes, 0°C to -20°C) chilling conditions in accordance with the invention compared to conventional chilling. The figures illustrate the significant benefit in yield that is achieved using evaporative principles (0.2% to 1.0% over conventional chilling).

## Claims

1. A method for processing a plurality of meat carcases (5) comprising:-
chilling the carcasses as they are led through an enclosure (1) having a plurality of cubicles (7), each cubicle comprising a plurality of spaced-apart nozzles;
the carcasses being chilled by circulating air through the enclosure at a speed of from 0.5 to 2 metres/second and a temperature of from 0°C to 5°C;
deluging the carcasses with water and/or a dilute solution of organic acid delivered through the plurality of nozzles (11) as the carcasses are led through the plurality of cubicles to induce surface evaporation and binding of water onto the carcass surface; and
turning the carcasses as they are led through a cubicle (7),
wherein the surface of a carcass (5) is deluged multiple times at spaced-apart intervals and
wherein all carcasses led through the enclosure (1) being subjected to the same treatment.

2. A method as claimed in claim 1 wherein during chilling the carcass (5) is deluged at time intervals of from 5 to 15 minutes.

3. A method as claimed in claim 2 wherein the carcass (5) is deluged at time intervals of about 10 minutes.

4. A method as claimed in any of claims 1 to 3 wherein the surface of the carcass (5) is periodically deluged over a period of from 10 to 180 minutes.

5. A method as claimed in claim 4 wherein the carcass (5) is periodically deluged over a period of about 120 minutes.

6. A method as claimed in any of claims 1 to 5 wherein water is deluged onto a carcass (5) from a water outlet (11) having a diameter of from 1mm to 2mm.

7. A method as claimed in any of claims 1 to 6 wherein the deluge water is at a temperature of from 0 to 20°C, wherein the deluge water may be at a temperature of from 1°C to 10°C.

8. A method as claimed in any of claims 1 to 7 wherein the carcass surface water activity is from 0.8 to 1.0.

9. A method as claimed in any of claims 1 to 8 wherein the air circulating during chilling is maintained at a relative humidity of greater than 90%.

10. A method as claimed in any of claims 1 to 9 wherein the surface of the carcass (5) is deluged with a solution containing organic acid at a concentration of from 2% to 5%.

11. A method as claimed in any of claims 1 to 10 wherein the carcass (5) is deluged at least 5 times between a first deluge and a final deluge and wherein the first and/or the final deluge is with a solution containing organic acid at a concentration of from 2% to 5%.

12. A method as claimed in any of claims 1 to 11 wherein all carcasses (5) led through the enclosure have the same residence time in the enclosure.

13. A method as claimed in any of claims 1 to 12 wherein the nozzles (11) are directed towards the surfaces of the carcass.

14. A method as claimed in any of claims 1 to 13 wherein the enclosure (1) comprises an overhead track (4) along which the carcasses (5) are led through the enclosure and the cubicles (7), the overhead track (4) being located above the cubicles (2).

15. A method as claimed in any of claims 1 to 14 wherein the carcass is a beef carcass.

## Patentansprüche

1. Verfahren zum Verarbeiten einer Vielzahl von Schlachttierkörpern (5), das Folgendes umfasst:
Abkühlen der Schlachtkörper, während sie durch einen geschlossenen Raum (1) mit einer Vielzahl von Abteilen (7) geführt werden, wobei die Abteile jeweils eine Vielzahl voneinander beabstandeter Düsen umfassen;
wobei die Schlachtkörper abgekühlt werden, indem Luft mit einer Geschwindigkeit von 0,5 bis 2 Meter/Sekunde und einer Temperatur von 0 °C bis 5 °C durch den geschlossenen Raum umgewälzt wird;
Fluten der Schlachtkörper mit Wasser und/oder einer verdünnten Lösung organischer Säure, das bzw. die durch die Vielzahl von Düsen (11) zugeführt wird, während die Schlachtkörper durch die Vielzahl von Abteilen geführt werden, um Oberflächenverdunstung und das Binden von Wasser an die Schlachtkörperoberfläche herbeizuführen; und
Wenden der Schlachtkörper, während sie durch ein Abteil (7) geführt werden,
wobei die Oberfläche eines Schlachtkörpers (5) in voneinander beabstandeten Intervallen mehrmals geflutet wird; und
wobei alle durch den geschlossenen Raum (1) geführten Schlachtkörper der gleichen Behandlung unterzogen werden.

2. Verfahren nach Anspruch 1, wobei der Schlachtkörper (5) während des Abkühlens in Zeitintervallen von 5 bis 15 Minuten geflutet wird.

3. Verfahren nach Anspruch 2, wobei der Schlachtkörper (5) in Zeitintervallen von etwa 10 Minuten geflutet wird.

4. Verfahren nach einem der Ansprüche 1 bis 3, wobei die Oberfläche des Schlachtkörpers (5) in einem Zeitraum von 10 bis 180 Minuten regelmäßig geflutet wird.

5. Verfahren nach Anspruch 4, wobei der Schlachtkörper (5) in einem Zeitraum von etwa 120 Minuten regelmäßig geflutet wird.

6. Verfahren nach einem der Ansprüche 1 bis 5, wobei Wasser aus einem Wasserauslass (11) mit einem Durchmesser von 1 mm bis 2 mm auf einen Schlachtkörper (5) geflutet wird.

7. Verfahren nach einem der Ansprüche 1 bis 6, wobei das Flutungswasser eine Temperatur von 0 bis 20 °C aufweist, wobei das Flutungswasser eine Temperatur von 1 °C bis 10 °C aufweisen kann.

8. Verfahren nach einem der Ansprüche 1 bis 7, wobei die Wasseraktivität der Schlachtkörperoberfläche von 0,8 bis 1,0 beträgt.

9. Verfahren nach einem der Ansprüche 1 bis 8, wobei die während des Abkühlens umgewälzte Luft auf einer relativen Feuchte von mehr als 90 % gehalten wird.

10. Verfahren nach einem der Ansprüche 1 bis 9, wobei die Oberfläche des Schlachtkörpers (5) mit einer Lösung geflutet wird, die organische Säure mit einer Konzentration von 2 % bis 5 % enthält.

11. Verfahren nach einem der Ansprüche 1 bis 10, wobei der Schlachtkörper (5) zwischen einer ersten Flutung und einer letzten Flutung mindestens 5-mal geflutet wird und wobei die erste und/oder die letzte Flutung mit einer Lösung erfolgt, die organische Säure mit einer Konzentration von 2 % bis 5 % enthält.

12. Verfahren nach einem der Ansprüche 1 bis 11, wobei alle durch den geschlossenen Raum geführten Schlachtkörper (5) die gleiche Verweilzeit in dem geschlossenen Raum aufweisen.

13. Verfahren nach einem der Ansprüche 1 bis 12, wobei die Düsen (11) auf die Oberflächen der Schlachtkörper gerichtet sind.

14. Verfahren nach einem der Ansprüche 1 bis 13, wobei der geschlossene Raum (1) eine Deckenlaufbahn (4) umfasst, entlang der die Schlachtkörper (5) durch den geschlossenen Raum und die Abteile (7) geführt werden, wobei sich die Deckenlaufbahn (4) über den Abteilen (2) befindet.

15. Verfahren nach einem der Ansprüche 1 bis 14, wobei es sich bei dem Schlachtkörper um einen Schlachtkörper vom Rind handelt.

## Revendications

1. Procédé pour le traitement d'une pluralité de carcasses de viande (5) comprenant :
la réfrigération des carcasses à mesure qu'elles sont conduites à travers une enceinte (1) ayant une pluralité de compartiments (7), chaque compartiment comprenant une pluralité de buses espacées ;
les carcasses étant refroidies par circulation d'air à travers l'enceinte à une vitesse allant de 0,5 à 2 mètres/seconde et à une température allant de 0 °C à 5 °C ;
l'arrosage intensif des carcasses avec de l'eau et/ou une solution diluée d'acide organique délivrée par la pluralité de buses (11) à mesure que les carcasses sont conduites à travers la pluralité de compartiments pour induire une évaporation de surface et une fixation de l'eau sur la surface des carcasses ; et
la rotation des carcasses à mesure qu'elles sont conduites à travers un compartiment (7), dans lequel la surface d'une carcasse (5) est arrosée de manière intensive plusieurs fois à des intervalles espacés et
dans lequel toutes les carcasses conduites à travers l'enceinte (1) sont soumises au même traitement.

2. Procédé selon la revendication 1 dans lequel, pendant la réfrigération, la carcasse (5) est arrosée de manière intensive à des intervalles de temps allant de 5 à 15 minutes.

3. Procédé selon la revendication 2 dans lequel la carcasse (5) est arrosée de manière intensive à des intervalles de temps d'environ 10 minutes.

4. Procédé selon l'une quelconque des revendications 1 à 3 dans lequel la surface de la carcasse (5) est périodiquement arrosée de manière intensive sur une période allant de 10 à 180 minutes.

5. Procédé selon la revendication 4 dans lequel la carcasse (5) est périodiquement arrosée de manière intensive sur une période d'environ 120 minutes.

6. Procédé selon l'une quelconque des revendications 1 à 5 dans lequel de l'eau est déversée sur une carcasse (5) à partir d'une sortie d'eau (11) ayant un diamètre allant de 1 mm à 2 mm.

7. Procédé selon l'une quelconque des revendications 1 à 6 dans lequel l'eau déversée se trouve à une température allant de 0 à 20 °C, dans lequel l'eau déversée peut se trouver à une température allant de 1 °C à 10 °C.

8. Procédé selon l'une quelconque des revendications 1 à 7 dans lequel l'activité de l'eau de surface de la carcasse va de 0,8 à 1,0.

9. Procédé selon l'une quelconque des revendications 1 à 8 dans lequel l'air circulant pendant la réfrigération est maintenu à une humidité relative supérieure à 90 %.

10. Procédé selon l'une quelconque des revendications 1 à 9 dans lequel la surface de la carcasse (5) est arrosée de manière intensive d'une solution contenant un acide organique à une concentration allant de 2 % à 5 %.

11. Procédé selon l'une quelconque des revendications 1 à 10 dans lequel la carcasse (5) est arrosée de manière intensive au moins 5 fois entre un premier arrosage intensif et un dernier arrosage intensif, et dans lequel le premier et/ou le dernier arrosage intensif est effectué avec une solution contenant un acide organique à une concentration allant de 2 % à 5 %.

12. Procédé selon l'une quelconque des revendications 1 à 11 dans lequel toutes les carcasses (5) conduites à travers l'enceinte ont le même temps de séjour dans l'enceinte.

13. Procédé selon l'une quelconque des revendications 1 à 12 dans lequel les buses (11) sont dirigées vers les surfaces de la carcasse.

14. Procédé selon l'une quelconque des revendications 1 à 13 dans lequel l'enceinte (1) comprend un rail aérien (4) le long duquel les carcasses (5) sont conduites à travers l'enceinte et les compartiments (7), le rail aérien (4) étant situé au-dessus des compartiments (2).

15. Procédé selon l'une quelconque des revendications 1 à 14 dans lequel la carcasse est une carcasse de bœuf.
